# FASCICULE DE BREVET EUROPEEN

(11) **EP 4 292 914 B1**
(45) Date de publication et mention de la délivrance du brevet: **04.02.2026**
(21) Numéro de dépôt: 23171728.1
(22) Date de dépôt: 04.05.2023
(51) Int. Cl.: B62H 3/04

(54) **SYSTEME DE DETECTION DE LA PRESENCE DE BICYCLES STATIONNES DANS UNE INSTALLATION DE STATIONNEMENT**
SYSTEM ZUR ERKENNUNG DER ANWESENHEIT VON STATIONÄR-BIZYKLEN IN EINER PARKANLAGE
SYSTEM FOR DETECTING THE PRESENCE OF STATIONARY BICYCLES IN A PARKING FACILITY

(30) Priorité: 14.06.2022 FR 2205736
(43) Date de publication de la demande: 20.12.2023
(73) Titulaire: Altinnova, 42160 Bonson (FR)
(72) Inventeur: LEFEBVRE, Julien, 42160 BONSON (FR)
(74) Mandataire: Ipsilon

(56) Documents cités:
- JP-A- 2017 133 208

## Description

### Domaine technique

L'invention concerne le domaine technique des systèmes de détection de la présence de bicycles stationnés dans une installation de stationnement, ainsi qu'une installation comprenant un tel système de détection.

### Art antérieur

Il est connu plusieurs systèmes pour détecter l'occupation des places de stationnement de bicycles. Lesdits systèmes comprennent par exemple des capteurs à ultrasons, des capteurs infrarouges, des capteurs à champs magnétique passif, des systèmes de traitement d'images vidéo, des radars à micro-ondes ou encore des capteurs lidar.

Ces capteurs peuvent être reliés avec des câbles électriques à des moyens de réception et de traitement des signaux émis par les capteurs pour en déduire l'occupation de la place de stationnement concernée.

Bien que techniquement simples, ces systèmes ne sont plus adaptés lorsqu'il s'agit d'équiper une installation comprenant un nombre important de places de stationnement, par exemple plus de 100 places, et notamment de l'ordre de 500 places.

Le nombre de câbles à faire cheminer et à relier aux moyens de réception et de traitement des signaux, rend l'opération fastidieuse et coûteuse.

Ainsi, afin de baisser les coûts d'installation et de simplifier la mise en œuvre, ces systèmes peuvent comprendre des capteurs alimentés par des piles ou batteries, éventuellement rechargées par des panneaux solaires, et reliés aux moyens de réception et de traitement des signaux par des technologies de communication sans fil.

La communication sans fil permet d'alléger l'installation, mais l'alimentation en énergie des capteurs par des batteries ou des panneaux solaires vient alourdir le coût d'entretien puisqu'il devient nécessaire de procéder périodiquement au rechargement ou au remplacement de cette source d'énergie, tâche qu'il devient complexe et fastidieux de réaliser dans une installation présentant plus de 100 places de stationnement par exemple.

Le document JP2017133208A décrit un système de stationnement pour vélo, autonome en énergie, mais qui ne donne pas entière satisfaction car sa mécanique est complexe et source de dysfonctionnements.

### Exposé de l'invention

L'un des buts de l'invention est donc de fournir un système de détection de la présence de bicycles stationnés chacun sur un emplacement d'une installation de stationnement d'une pluralité de bicycles, dont les coûts d'installation et d'entretien sont réduits, tout en étant compatible avec un nombre important des places de stationnement, notamment supérieur à 100, voire supérieur à 500.

À cet effet, il a été mis au point un système de détection de la présence ou de l'absence de bicycles stationnés chacun sur un emplacement d'une installation de stationnement d'une pluralité de bicycles.

Selon l'invention, le système comprend :
- des interrupteurs destinés à être positionnés au niveau de chaque emplacement, et déplaçables depuis une première position, rappelée, de préférence élastiquement, vers une deuxième position destinée à être maintenue par le bicycle stationné en appui, directement ou indirectement, sur l'interrupteur ;
- des convertisseurs mécaniques d'énergie, assujettis à chaque interrupteur et aptes à convertir le déplacement de l'interrupteur en courant électrique ;
- des émetteurs connectés à chaque convertisseur et destinés à être alimentés électriquement, notamment lors du changement de position de l'interrupteur, par les convertisseurs mécaniques d'énergie pour envoyer un signal d'actionnement de l'interrupteur, le signal émis intégrant au moins un identifiant de l'emplacement au niveau duquel l'interrupteur est destiné à être positionné, et de préférence également un identifiant de la position de l'interrupteur, à savoir première position ou deuxième position ;
- des moyens de réception des signaux d'actionnement ; et
- des moyens de traitement des signaux pour déduire une présence ou une absence du bicycle sur l'emplacement en fonction des signaux d'actionnement reçus;
les convertisseurs mécaniques d'énergie sont montés directement sur chaque interrupteur et sont aptes à convertir le déplacement de l'interrupteur en courant électrique.

De cette manière, le positionnement d'un bicycle en position de stationnement vient appuyer, directement ou indirectement sur l'interrupteur pour le faire passer et le maintenir dans une deuxième position. Le passage dans cette deuxième position permet d'émettre un signal, réceptionné et ensuite traité pour déduire que l'emplacement est dorénavant occupé.

Lorsque le bicycle est retiré de la place de stationnement, la première position de l'interrupteur est rappelée, de préférence élastiquement de sorte à émettre, lors du changement de position, un signal qui est reçu et traité pour déduire que la place de stationnement est dorénavant libre.

L'interrupteur, le convertisseur mécanique et l'émetteur fonctionnent donc sans pile et aucun fil n'est présent entre l'émetteur et les moyens de réception des signaux. Les coûts d'installation et d'entretien sont réduits, et le système est compatible avec un nombre important de places de stationnement, notamment supérieur à 100, voire supérieur à 500.

Selon une forme de réalisation particulière, l'interrupteur est de tout type approprié, par exemple sous la forme d'un bouton poussoir déplaçable à l'encontre d'un organe élastique de rappel.

Dans un mode de réalisation particulier, l'interrupteur, le convertisseur d'énergie et l'émetteur sont disposés dans un boitier, de préférence étanche, avec l'interrupteur présentant une partie en débordement du boitier pour être actionné directement, ou indirectement, par le bicycle stationné.

Dans un mode de réalisation particulier, le boitier comprend une membrane souple, recouvrant la partie en débordement de l'interrupteur et fixée au boitier de manière étanche.

Par conséquent, le système peut fonctionner dans des installations de stationnement de bicycle situées aussi bien à l'intérieur qu'à l'extérieur. L'actionnement de l'interrupteur est effectué au travers de la membrane, en appuyant sur la membrane, tout en gardant l'étanchéité.

Selon une forme de réalisation particulière, le convertisseur mécanique d'énergie comprend une partie aimantée déplaçable avec l'interrupteur à travers une bobine destinée à générer un courant électrique pour l'alimentation de l'émetteur.

De préférence, les moyens de réception des signaux sont sous la forme d'au moins une passerelle informatique, adaptée pour recevoir et rediriger un nombre important de signaux.

Selon un mode de réalisation particulier, les moyens de traitement des signaux comprennent un ordinateur connecté de préférence en filaire aux moyens de réception.

L'invention concerne également une installation de stationnement pour bicycles comprenant une pluralité d'emplacements et un système de détection tel que précité pour déduire une présence ou une absence d'un bicycle sur chaque emplacement.

De préférence, l'emplacement de stationnement de l'installation est de tout type approprié, par exemple sous la forme de racks de stationnement adaptés pour les bicycles.

Dans un mode de réalisation particulier, l'installation comprend des moyens d'actionnement de l'interrupteur, destinés à recevoir au moins une roue du bicycle et montés mobiles pour passer d'une première position à une deuxième position destinée à être maintenue par le bicycle stationné, le déplacement des moyens d'actionnement entraine le déplacement de l'interrupteur, la première position des moyens d'actionnement étant rappelée soit élastiquement, soit mécaniquement par le retrait du bicycle de l'emplacement de stationnement.

Selon une forme de réalisation particulière, l'interrupteur est positionné dans l'installation au niveau du sol, afin de s'actionner sous le poids du bicycle ou au niveau d'un élément de façade, afin de s'actionner lors de la mise en butée du bicycle contre l'élément de façade.

### Brève description des dessins

[Fig. 1] est une représentation schématique de l'interrupteur du système de détection de la présence de bicycles de la présente invention, lorsque l'emplacement de stationnement est libre.
[Fig. 2] est une vue similaire à celle de la figure 1, lorsque l'emplacement de stationnement est occupé par un bicycle.
[Fig. 3] est une représentation schématique d'une partie d'une installation de stationnement comprenant un système de détection de la présence de bicycles au niveau des emplacements.
[Fig. 4] est une représentation schématique du système de détection selon l'invention.
[Fig. 5] est une vue illustrant un rack de stationnement de l'installation équipé d'un système de détection selon l'invention.

### Description détaillée de l'invention

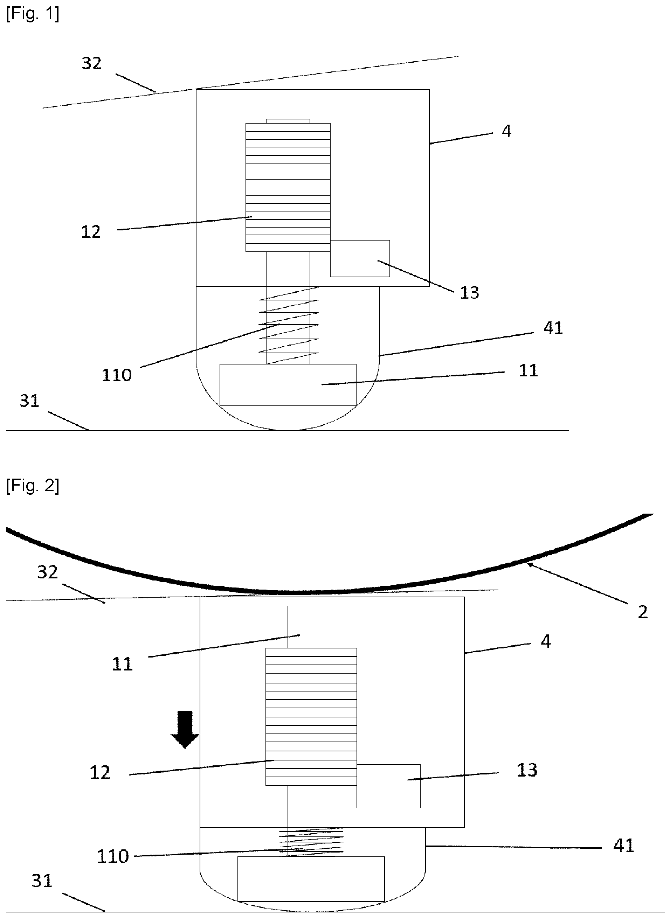

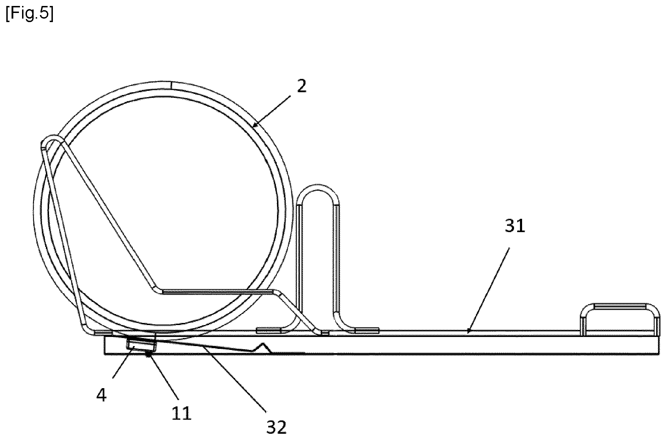

En référence figure 1 à 5, l'invention concerne un système (1) de détection de la présence de bicycles (2) stationnés chacun sur un emplacement d'une installation (3) de stationnement d'une pluralité de bicycles (2).

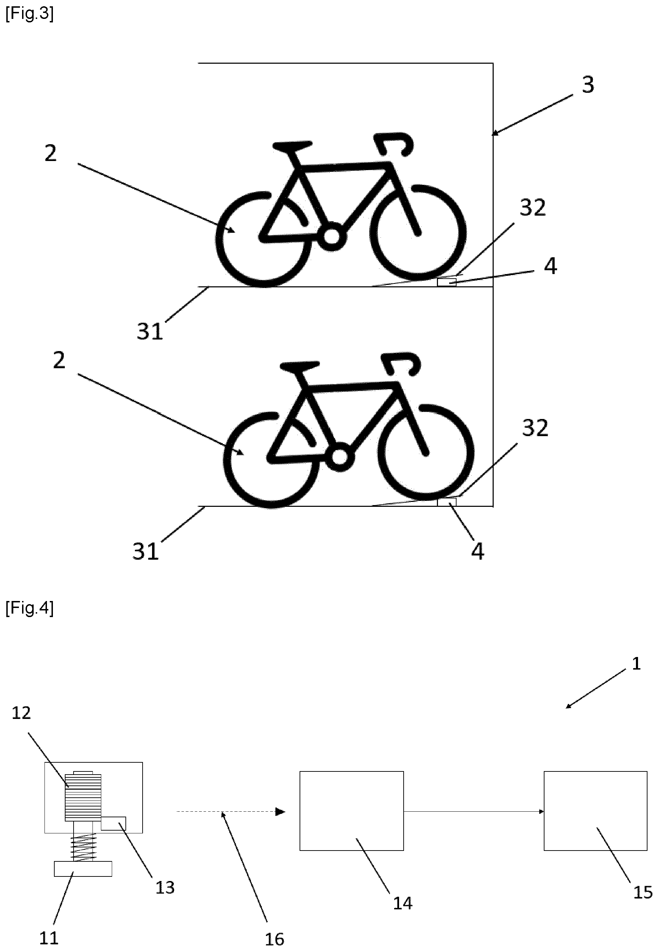

Le système (1) selon l'invention, illustré en figure 4, comprend des interrupteurs (11) positionnés au niveau de chaque emplacement, et déplaçables depuis une première position rappelée, mécaniquement ou élastiquement, vers une deuxième position, celle illustrée, maintenue par le bicycle (2) en appui, directement ou indirectement, sur l'interrupteur (11).

Le système (1) comprend également des convertisseurs d'énergie (12), assujettis à chaque interrupteur (11) et aptes à convertir le déplacement de l'interrupteur (11) en courant électrique. Par mécanique, on entend que la conversion s'effectue sans source d'alimentation électrique.

Le courant électrique ainsi créé est destiné à alimenter électriquement des émetteurs (13) connectés à chaque convertisseur d'énergie (12) afin d'envoyer un signal (16) d'actionnement de l'interrupteur (11) à des moyens de réception (14) des signaux émis.

Les moyens de réception (14) des signaux d'actionnement, sont par exemple au moins une passerelle informatique, adaptée pour recevoir et rediriger un nombre important de signaux. Les moyens de réception (14) transmettent les signaux (16) à des moyens de traitement (15) du signal pour déduire une présence ou une absence du bicycle (2) en fonction du signal (16) d'actionnement reçu. En fonction de la configuration de l'installation de stationnement, et de la portée des émetteurs (13), par exemple de l'ordre de 50 m pour des émetteurs radio, le système selon l'invention peut comporter plusieurs passerelles informatiques reliées entre elles afin de recevoir correctement les signaux des émetteurs. Si les émetteurs sont trop éloignés d'une première passerelle informatique, leur signal ne sera pas reçu. Dans cette situation, une deuxième passerelle informatique est branchée en série sur la première passerelle. Le système comprend autant de passerelles informatiques que nécessaire.

Les moyens de traitement (15) du signal sont de tout type approprié, par exemple un ordinateur connecté de préférence en filaire aux moyens de réception (14), et exécutant un logiciel de traitement.

En pratique, le signal (16) d'actionnement émis lors du passage de la première position à la deuxième position indique qu'un bicycle (2) est rentré en position de stationnement, alors qu'un signal (16) d'actionnement du passage de la deuxième position à la première position indique la sortie du bicycle (2). Les moyens de traitement intègrent toute logique appropriée, par exemple lorsque deux signaux d'actionnement émis par le même émetteur sont reçus dans un laps de temps court, par exemple inférieur à 10s, voire 5s, ceux-ci sont ignorés car ils résultent probablement d'une erreur, d'un déplacement inopiné du bicycle, ou bien d'un simple déplacement du guidon pour faciliter la mise en place d'un bicycle adjacent par exemple.

Pour ce faire, il peut être nécessaire, au préalable, de réaliser une mise à zéro des moyens de traitement (15) des signaux de sorte que lorsqu'un premier signal est reçu, il est interprété et traité comme indiquant la présence d'un bicycle (2).

En effet, dans un mode de réalisation particulier, l'invention ne détecte pas directement la présence ou l'absence d'un bicycle (2) mais seulement le changement de position de l'interrupteur (11), ledit interrupteur (11) est actionné par l'entrée ou la sortie du bicycle (2). Le comptage des signaux (16) d'actionnement reçus permet de connaitre la disponibilité ou l'indisponibilité de l'emplacement. Par exemple un nombre de signaux reçus impair indique la présence d'un bicycle, tandis qu'un nombre pair indique l'absence d'un bicycle.

Dans un autre mode de réalisation, et d'une manière préférée, l'émetteur (13) n'envoie pas le même signal lorsqu'il passe en première position ou en deuxième position, et notamment en fonction du sens dans lequel il est alimenté. Le signal émis étant différent pour un même émetteur, les moyens de traitement des signaux pourront déduire si l'interrupteur vient de passer de la première position à la deuxième position, ou inversement. Chaque émetteur (13) envoie un signal sous la forme d'un code comportant un identifiant unique de l'émetteur et la position de l'interrupteur (11), c'est-à-dire la première position ou la deuxième position, en pratique une position de repos correspondant à une absence de bicycle, ou une position enfoncée de l'interrupteur (11) correspondant à la présence d'un bicycle. Au niveau des moyens de traitement, les identifiants des émetteurs sont chacun associé à un emplacement, notamment dans une base de données.

L'interrupteur (11) est de tout type approprié, par exemple sous la forme d'un interrupteur à bascule ou encore d'un bouton poussoir, dont une position est rappelée par tout système mécanique approprié, par exemple un système à bascule actionné par au moins une roue d'un bicycle, ou bien par un organe élastique de rappel (110).

Comme illustré en figure 2, le convertisseur d'énergie (12) assujetti à l'interrupteur (11) converti le changement de position de l'interrupteur, par exemple le déplacement linéaire d'une partie aimantée, déplaçable avec l'interrupteur, à travers une bobine qui est destinée à générer un courant électrique pour l'alimentation de l'émetteur (13).

Par « assujetti », on signifie que le convertisseur d'énergie (12) est monté directement sur l'interrupteur (11). De préférence, il s'agit d'une conception mutualisée, dans laquelle certaines pièces de l'interrupteur (11) font partie du convertisseur d'énergie (12).

La conception du système (1) intégrant un convertisseur d'énergie (12) assujetti à l'interrupteur (11) est simplifiée, car elle évite une transmission du mouvement depuis l'interrupteur (11) vers le convertisseur (12). De plus, le convertisseur (12) étant au plus près de l'interrupteur (11), la connectivité électrique entre ces deux éléments est raccourcie, donc simplifiée.

Le système (1) obtenu est donc plus économique, et moins susceptible d'être défaillant.

L'émetteur (13) est alors capable d'émettre un signal (16) d'actionnement de l'interrupteur (11), par exemple radio, pendant le laps de temps très court pendant lequel il est alimenté. Le signal (16) d'actionnement émis par l'émetteur (13) comprend un identifiant, de préférence unique, correspondant à l'emplacement au niveau duquel l'interrupteur (11) est positionné, et comme précité, de préférence également un identifiant de la position de l'interrupteur, à savoir première position ou deuxième position.

L'installation (3) de stationnement comprend des emplacements de tout type approprié, par exemple sous la forme de racks (31) de stationnement, adaptés pour recevoir au moins une roue, et de préférence la roue avant, ou les deux roues des bicycles (2).

Dans un mode de réalisation particulier, l'installation comprend des moyens d'actionnement (32) de l'interrupteur (11). Ces moyens d'actionnement (32) sont par exemple montés sur les racks, et sont destinés à recevoir au moins une roue du bicycle. Les moyens d'actionnement (32) sont par exemple montés mobiles pour passer d'une première position à une deuxième position, laquelle deuxième position est destinée à être maintenue par le bicycle (2) stationné. Le déplacement des moyens d'actionnement entraine le déplacement de l'interrupteur, la première position des moyens d'actionnement (32) étant soit rappelée élastiquement, soit rappelée mécaniquement par le retrait du bicycle de l'emplacement de stationnement.

Ces moyens d'actionnement (32) peuvent par exemple être sous la forme d'une lame (32). L'interrupteur (11) est par exemple fixé à une extrémité de la lame (32), au niveau d'une face supérieure pour que la roue du bicycle vienne en appui dessus et l'actionner. Dans une autre configuration, illustrée, l'interrupteur est fixé au niveau d'une face inférieure de la lame (32) et la lame est élastique ou montée basculante de sorte que le positionnement de la roue sur la lame (32) entraine l'abaissement de la lame pour venir actionner l'interrupteur, en contre appui contre le sol ou un autre élément structurel. Dans ces modes de réalisation, c'est le poids du bicycle qui permet d'actionner l'interrupteur (11) et de le maintenir dans la deuxième position.

Il peut tout à fait être imaginé que l'interrupteur soit positionné sur un élément de façade, afin de s'actionner lors de la mise en butée du bicycle (2) contre l'élément de façade.

De préférence, l'interrupteur (11) et le convertisseur mécanique d'énergie (12) sont disposés, voire encapsulés, dans un boitier (4) étanche. Les émetteurs (13), les moyens de réception (14) des signaux d'actionnement et les moyens de traitement (15) des signaux (16) sont déportés et disposés par exemple dans un local attenant.

Dans ce mode de réalisation, l'interrupteur (11) comprend une partie en débordement du boitier (4), tel qu'un bouton, pour être actionné directement, ou indirectement, par le bicycle stationné.

Le boitier (4) comprend de préférence des moyens d'étanchéité (41), tels qu'une membrane souple (41), recouvrant la partie en débordement de l'interrupteur et fixée au boitier de manière étanche et ce afin de permettre l'utilisation du système (1) de détection dans des installations (3) de stationnement disposées à l'extérieur.

Ainsi, dans un mode de réalisation préféré :
- le système (1) est autoalimenté via le mouvement de l'interrupteur (11) lorsqu'un bicycle (2) appuie dessus, ce qui déclenche l'envoi d'un signal (16) intégrant l'identifiant du système (1) (ou de son emplacement) ainsi qu'une information binaire signifiant que l'emplacement est occupé ;
- le système (1) est autoalimenté via le mouvement de l'interrupteur (11) lorsqu'un bicycle (2) est retiré et que l'interrupteur (11) est libéré, ce qui déclenche l'envoi d'un signal (16) intégrant l'identifiant du système (1) (ou de son emplacement) ainsi qu'une information binaire signifiant que l'emplacement est libre ;
- les composants du systèmes (1) tels que le convertisseur mécanique d'énergie (12) et l'émetteur (13) sont disposés dans un boitier (4) étanche ;
- le boîtier (4) reçoit une lame support qui permet d'augmenter la zone de contact entre l'interrupteur (11) et le pneu du bicycle (2), ce qui permet de s'adapter aux différentes tailles de bicycles (empattement plus ou moins grand, roue plus ou moins grandes ou larges). La lame support permet également de s'adapter à la structure de l'installation (3) et de se fixer dessus.

Il ressort de ce qui précède que l'invention fournit bien un système (1) de détection de la présence de bicycles (2) stationnés chacun sur un emplacement d'une installation (3) de stationnement d'une pluralité de bicycles (2) qui permet de réduire les coûts d'installation et d'entretien, tout en étant compatible avec un nombre important de places de stationnement, notamment supérieur à 100, voire supérieur à 500.

Le système selon l'invention fonctionne sans batterie, sans pile, et la communication entre les émetteurs (13) et les moyens de réception (15) est réalisée sans fil.

## Revendications

1. Système (1) de détection de la présence de bicycles (2) stationnés chacun sur un emplacement d'une installation (3) de stationnement d'une pluralité de bicycles (2), le système (1) comprenant :
- des interrupteurs (11) destinés à être positionnés au niveau de chaque emplacement, et déplaçables depuis une première position, rappelée, de préférence élastiquement, vers une deuxième position destinée à être maintenue par le bicycle (2) stationné en appui, directement ou indirectement, sur l'interrupteur (11) ;
- des convertisseurs mécaniques d'énergie (12) aptes à convertir un déplacement en courant électrique ;
- des émetteurs (13) connectés à chaque convertisseur (12) et destinés à être alimentés électriquement par les convertisseurs mécaniques d'énergie (12) pour envoyer un signal (16) d'actionnement de l'interrupteur (11), le signal (16) émis intégrant au moins un identifiant de l'emplacement au niveau duquel l'interrupteur (11) est destiné à être positionné ;
- des moyens de réception (14) des signaux d'actionnement ; et
- des moyens de traitement (15) des signaux (16) pour déduire une présence ou une absence du bicycle (2) sur l'emplacement en fonction des signaux (16) d'actionnement reçus
***caractérisé* en ce que** les convertisseurs mécaniques d'énergie (12) sont montés directement sur chaque interrupteur (11) et sont aptes à convertir le déplacement de l'interrupteur (11) en courant électrique.

2. Système (1) selon la revendication 1, ***caractérisé* en ce que** le signal (16) émis par l'émetteur (13) intégrant également un identifiant de la position de l'interrupteur (11), à savoir première position ou deuxième position.

3. Système (1) selon l'une des revendications précédentes, ***caractérisé* en ce que** l'interrupteur (11), le convertisseur d'énergie (12) et l'émetteur (13) de chaque emplacement sont disposés dans un boitier (4) avec l'interrupteur (11) présentant une partie en débordement du boitier (4) pour être actionné directement, ou indirectement, par le bicycle stationné.

4. Système (1) selon la revendication 3, ***caractérisé* en ce que** le boitier (4) comprend une membrane souple (41), recouvrant la partie en débordement de l'interrupteur et fixée au boitier de manière étanche.

5. Système (1) selon l'une des revendications précédentes, ***caractérisé* en ce que** le convertisseur mécanique d'énergie (12) comprend une partie aimantée déplaçable avec l'interrupteur à travers une bobine destinée à générer un courant électrique pour l'alimentation de l'émetteur (13).

6. Système (1) selon l'une des revendications précédentes, ***caractérisé* en ce que** les moyens de réception (14) des signaux sont sous la forme d'au moins une passerelle informatique, adaptée pour recevoir et rediriger un nombre important de signaux.

7. Système (1) selon l'une des revendications précédentes, ***caractérisé* en ce que** les moyens de traitement (15) des signaux (16) comprennent un ordinateur connecté de préférence en filaire aux moyens de réception (14).

8. Installation (3) de stationnement pour bicycles comprenant une pluralité d'emplacements et un système (1) de détection selon l'une des revendications 1 à 7 pour déduire une présence ou une absence d'un bicycle (2) sur chaque emplacement.

9. Installation (3) selon la revendication 8, ***caractérisée* en ce qu'**elle comprend des moyens d'actionnement (32) de l'interrupteur (11), destinés à recevoir au moins une roue du bicycle et montés mobiles pour passer d'une première position à une deuxième position destinée à être maintenue par le bicycle (2) stationné, le déplacement des moyens d'actionnement (32) entraine le déplacement de l'interrupteur, la première position des moyens d'actionnement (32) étant rappelée mécaniquement ou élastiquement ou par le retrait du bicycle de l'emplacement de stationnement.

10. Installation (3) selon l'une des revendications 8 à 9, ***caractérisée* en ce que** l'interrupteur (11) est positionné au niveau du sol, afin de s'actionner sous le poids du bicycle (2) ou au niveau d'un élément de façade, afin de s'actionner lors de la mise en butée du bicycle (2) contre l'élément de façade.

## Patentansprüche

1. System (1) zur Detektion der Anwesenheit von Fahrrädern (2), die jeweils auf einem Stellplatz einer Parkanlage (3) für eine Mehrzahl von Fahrrädern (2) abgestellt sind, wobei das System (1) umfasst:
- Schalter (11), die dazu bestimmt sind, auf Höhe jedes Stellplatzes angeordnet zu werden, und die von einer ersten, vorzugsweise elastisch rückgestellten Position in eine zweite Position bewegbar sind, welche durch das abgestellte Fahrrad (2), das direkt oder indirekt auf den Schalter (11) drückt, gehalten wird;
- mechanische Energieumwandler (12), die dazu geeignet sind, eine Bewegung in elektrischen Strom umzuwandeln;
- Sender (13), die mit jedem Energieumwandler (12) verbunden sind und dazu bestimmt sind, durch die mechanischen Energieumwandler (12) elektrisch gespeist zu werden, um ein Betätigungssignal (16) des Schalters (11) zu senden, wobei das ausgesendete Signal (16) mindestens eine Kennung des Stellplatzes umfasst, an dem der Schalter (11) positioniert ist;
- Mittel (14) zum Empfangen der Betätigungssignale; und
- Mittel (15) zur Verarbeitung der Signale (16), um aus den empfangenen Betätigungssignalen (16) auf die Anwesenheit oder Abwesenheit eines Fahrrads (2) auf dem Stellplatz zu schließen,
**dadurch gekennzeichnet, dass** die mechanischen Energieumwandler (12) direkt auf jedem Schalter (11) montiert sind und dazu geeignet sind, die Bewegung des Schalters (11) in elektrischen Strom umzuwandeln.

2. System (1) nach Anspruch 1, **dadurch gekennzeichnet, dass** das vom Sender (13) ausgesendete Signal (16) zusätzlich eine Kennung der Position des Schalters (11) umfasst, nämlich der ersten Position oder der zweiten Position.

3. System (1) nach einem der vorhergehenden Ansprüche, **dadurch gekennzeichnet, dass** der Schalter (11), der Energieumwandler (12) und der Sender (13) jedes Stellplatzes in einem Gehäuse (4) angeordnet sind, wobei der Schalter (11) einen aus dem Gehäuse (4) hervorstehenden Abschnitt aufweist, um direkt oder indirekt durch das abgestellte Fahrrad betätigt zu werden.

4. System (1) nach Anspruch 3, **dadurch gekennzeichnet, dass** das Gehäuse (4) eine flexible Membran (41) umfasst, die den hervorstehenden Abschnitt des Schalters abdeckt und in wasserdichter Weise am Gehäuse befestigt ist.

5. System (1) nach einem der vorhergehenden Ansprüche, **dadurch gekennzeichnet, dass** der mechanische Energieumwandler (12) einen magnetisierten Teil umfasst, der sich gemeinsam mit dem Schalter durch eine Spule bewegt, die dazu bestimmt ist, einen elektrischen Strom zur Versorgung des Senders (13) zu erzeugen.

6. System (1) nach einem der vorhergehenden Ansprüche, **dadurch gekennzeichnet, dass** die Mittel (14) zum Empfangen der Signale in Form von mindestens einem Computer-Gateway ausgebildet sind, das dazu geeignet ist, eine große Anzahl von Signalen zu empfangen und weiterzuleiten.

7. System (1) nach einem der vorhergehenden Ansprüche, **dadurch gekennzeichnet, dass** die Mittel (15) zur Signalverarbeitung einen Computer umfassen, der vorzugsweise drahtgebunden mit den Empfangsmitteln (14) verbunden ist.

8. Fahrradparkanlage (3) mit einer Mehrzahl von Stellplätzen und einem Detektionssystem (1) nach einem der Ansprüche 1 bis 7, um für jeden Stellplatz auf die Anwesenheit oder Abwesenheit eines Fahrrads (2) zu schließen.

9. Anlage (3) nach Anspruch 8, **dadurch gekennzeichnet, dass** sie Betätigungsmittel (32) für den Schalter (11) umfasst, die dazu bestimmt sind, mindestens ein Rad des Fahrrads aufzunehmen und beweglich montiert sind, um sich von einer ersten Position in eine zweite Position zu bewegen, die durch das abgestellte Fahrrad (2) gehalten wird, wobei die Bewegung der Betätigungsmittel (32) die Bewegung des Schalters bewirkt und die erste Position der Betätigungsmittel (32) mechanisch oder elastisch oder durch Entfernen des Fahrrads aus dem Stellplatz wiederhergestellt wird.

10. Anlage (3) nach einem der Ansprüche 8 bis 9, **dadurch gekennzeichnet, dass** der Schalter (11) auf Bodenniveau positioniert ist, um unter dem Gewicht des Fahrrads (2) betätigt zu werden, oder an einem Fassadenelement angeordnet ist, um betätigt zu werden, wenn das Fahrrad (2) gegen das Fassadenelement anschlägt.

## Claims

1. System (1) for detecting the presence of bicycles (2) each parked in a parking space of a parking facility (3) for a plurality of bicycles (2), the system (1) comprising:
- switches (11) intended to be positioned at each space and movable from a first position, returned, preferably elastically, to a second position intended to be maintained by the parked bicycle (2) bearing, directly or indirectly, on the switch (11);
- mechanical energy converters (12) adapted to convert a displacement into electrical current;
- transmitters (13) connected to each converter (12) and intended to be electrically powered by the mechanical energy converters (12) in order to send a switch actuation signal (16), the emitted signal (16) including at least one identifier of the space at which the switch (11) is intended to be positioned;
- means (14) for receiving the actuation signals; and
- means (15) for processing the signals (16) in order to deduce the presence or absence of the bicycle (2) in the space as a function of the received actuation signals (16),
**characterized in that** the mechanical energy converters (12) are mounted directly on each switch (11) and are adapted to convert the movement of the switch (11) into electrical current.

2. System (1) according to claim 1, **characterized in that** the signal (16) emitted by the transmitter (13) also includes an identifier of the position of the switch (11), namely the first position or the second position.

3. System (1) according to any one of the preceding claims, **characterized in that** the switch (11), the energy converter (12) and the transmitter (13) of each space are arranged in a housing (4), the switch (11) having a portion projecting from the housing (4) so as to be actuated directly or indirectly by the parked bicycle.

4. System (1) according to claim 3, **characterized in that** the housing (4) comprises a flexible membrane (41) covering the projecting portion of the switch and fixed to the housing in a watertight manner.

5. System (1) according to any one of the preceding claims, **characterized in that** the mechanical energy converter (12) comprises a magnetized part movable with the switch through a coil intended to generate an electrical current for powering the transmitter (13).

6. System (1) according to any one of the preceding claims, **characterized in that** the means (14) for receiving the signals are in the form of at least one computer gateway adapted to receive and forward a large number of signals.

7. System (1) according to any one of the preceding claims, **characterized in that** the signal processing means (15) comprise a computer, preferably connected by wire to the reception means (14).

8. Bicycle parking facility (3) comprising a plurality of spaces and a detection system (1) according to any one of claims 1 to 7 for deducing the presence or absence of a bicycle (2) in each space.

9. Facility (3) according to claim 8, **characterized in that** it comprises switch actuation means (32) intended to receive at least one wheel of the bicycle and movably mounted to move from a first position to a second position intended to be maintained by the parked bicycle (2), movement of the actuation means (32) causing movement of the switch, the first position of the actuation means (32) being returned mechanically or elastically or by removal of the bicycle from the parking space.

10. Facility (3) according to any one of claims 8 to 9, **characterized in that** the switch (11) is positioned at ground level so as to be actuated under the weight of the bicycle (2), or at a façade element so as to be actuated when the bicycle (2) comes into abutment against the façade element.
